# EUROPÄISCHE PATENTSCHRIFT

(11) **EP 3 971 031 B1**
(45) Veröffentlichungstag und Bekanntmachung des Hinweises auf die Patenterteilung: **02.12.2026**
(21) Anmeldenummer: 21196907.6
(22) Anmeldetag: 15.09.2021
(51) Int. Cl.: B60P 7/08, G01L 5/06

(54) **VORRICHTUNG ZUM ANZEIGEN EINER ZUGSPANNUNG**
DEVICE FOR INDICATING A TENSILE STRESS
DISPOSITIF D'INDICATION D'UNE CONTRAINTE DE TRACTION

(30) Priorität: 16.09.2020 DE 102020005679
(43) Veröffentlichungstag der Anmeldung: 23.03.2022
(73) Patentinhaber: Span Set Gesellschaft für Transportsysteme und technische Bänder mit beschränkter Haftung & Co. Kommanditgesellschaft, 52531 Übach-Palenberg (DE)
(72) Erfinder: Schmitz, Ralf, 52477 Alsdorf (DE)
(74) Vertreter: Taubert, Diana

(56) Entgegenhaltungen:
- EP-A2- 0 434 441
- DE-A1- 102013 012 772
- DE-A1- 2 055 253

## Beschreibung

Die Erfindung betrifft eine Vorrichtung zum Anzeigen einer Zugspannung an biegeschlaffen Lastmitteln, zum Beispiel Zurrgurten, Hebebändern oder sonstige Vorrichtungen, insbesondere solche zum Verzurren von Gegenständen auf einer Ladefläche sowie ein Zurrgurt mit einer solchen Vorrichtung.

Vorrichtungen zur Anzeige einer Zugspannung, konkret einer Vorspannkraft, auch Belastungsanzeiger genannt, sind bereits aus der EP 0984 873 A1 bekannt. Dabei ist der Belastungsanzeiger kreisförmig oder tropfenförmig ausgebildet und an einer Schlaufe oder Öse des biegeschlaffen Lastmittels angeordnet, welche selbst an einem der Enden des biegeschlaffen Lastmittels vorgesehen ist. Der Belastungsanzeiger ist dabei zusammen mit einem weiteren Bauteil, auch Adaptionsteil genannt, so beispielhaft einer Spannratsche, in der Schlaufe und zwar neben oder an einem Bolzen des Adaptionsteils angeordnet. Der Belastungsanzeiger ist als Federelement einseitig geöffnet und zwar in Form eines C-Elements. Als nachteilig hat sich dabei erwiesen, dass bei hohen Zurrkräften die Feder von sich in einer derartigen Weise geometrisch verändert, dass eine veränderte Anzeige nicht mehr mit dem menschlichen Auge leicht wahrnehmbar **ist.** Eine zusätzliche Anzeigenverstärkung ist notwendig.

Eine Weiterbildung dieser Art einer Belastungsanzeige in Form eines C-Elements mit einer derartigen Anordnung innerhalb des Lastmittels offenbart ebenfalls die EP 1 537 393 A1. Dort besteht der Belastungsanzeiger nicht nur aus einem Federelement, sondern zusätzlich aus einem weiteren Bauteil, nämlich einem mit der Feder formschlüssig kombinierten Formteil, das mit dem Federelement von einer Anfangslage bis zu einer durch das Formteil selbstbestimmten Endlage verformbar **ist.**

Ein Nachteil dieser Lösung besteht darin, dass zwei Bauteile, nämlich das Federelement sowie das Formteil, den Belastungsanzeiger bilden, was kostenintensiv ist.

Darüber hinaus können die vorbeschriebenen Belastungsanzeiger keine Überlastung darstellen, da das jeweilige C-förmige Federelement auch bei einer Überlastung in seiner komprimierten Endposition verbleibt.

Des Weiteren geht aus der EP 0 434 441 A2 ein Belastungsanzeiger hervor, der als einstückiges Bauteil aus Gummi oder einem Elastomer ausgebildet ist und in eine Schlaufe einer Zurrvorrichtung, beispielhaft bei einer LKW-Plane, eingesetzt ist.

Die Aufgabe der Erfindung besteht darin, einen optimierten Belastungsanzeiger und eine Zurrvorrichtung / biegeschlaffes Lastmittel mit einem solchen Belastungsanzeiger bereitzustellen.

Diese Aufgabe wird erfindungsgemäß durch eine Vorrichtung gemäß der Merkmale des Hauptanspruchs 1, einer Zurrvorrichtung des Nebenanspruchs 15 und eines biegeschlaffen Lastmittels nach Anspruch 16 gelöst, wobei die Unteransprüche weitere erfindungsgemäße Ausgestaltungsvarianten dieser Lösungen beinhalten.

Danach weist die erfindungsgemäße Vorrichtung zum Anzeigen einer Zugspannung an einem biegeschlaffen Lastmittel, wobei die Vorrichtung in ihrer Längsausdehnung in Zugrichtung des biegenschlaffen Lastmittels in eine vorzugsweise, jedoch nicht notwendigerweise separat dafür vorgesehene Schlaufe oder Öse des biegeschlaffen Lastmittels anordnenbar ist, folgende Merkmale auf. Das biegeschlaffe Lastmittel ist beispielhaft Teil einer bekannten Zurrvorrichtung.

Die Vorrichtung weist ein ein- oder zweistückiges Federelement mit zwei sich gegenüberliegenden konvexen, elastisch verformbaren Bogenabschnitten, die auch als Flächenabschnitte bezeichnet werden können, auf, die an ihren Endbereichen aneinander liegen. Durch die Bogenabschnitte wird ein Federinnenraum gebildet. In dem Federinnenraum an Innenflächen der beiden Bogenabschnitte ist jeweils mindestens eine Indikatoranzeige angeordnet, die beispielhaft, aber nicht erfindungsnotwendig in den Federinnenraum hineinragen können. Äußere Flächen der Bogenabschnitte bilden ganz oder teilweise eine Mantelfläche.

Die mindestens zwei Indikatoranzeigen sind entweder sich gegenüberliegend oder versetzt zueinander im Federinnenraum angeordnet. In einer Nullstellung der Vorrichtung ohne eine auf die Bogenabschnitte, also das Federelement, wirkende Kraft, so einer Zugspannkraft bei Anordnung in dem funktionsgemäß verwendeten biegeschlaffen Lastmittel, besitzen die Indikatoranzeigen einen definierten Abstand zueinander, der je Ausgestaltung der Vorrichtung unterschiedlich sein kann. Bei einer auf die Bogenabschnitte, also das Federelement, wirkenden Kraft, so der Zugspannkraft, verringert sich der definierte Abstand erfindungsgemäß und kann so eine Veränderung der auf die Vorrichtung wirkenden Kraft anzeigen. Bei Anordnung in dem funktionsgemäß verwendeten biegeschlaffen Lastmittel kann so eine sich verändernde Zugspannkraft und somit gleichsam die bei Verzurren aufgebaute Vorspannkraft des biegeschlaffen Lastmittels angezeigt werden.

Die auf die Vorrichtung und damit auf das Federelement wirkende Kraft ist die Zugspannkraft beziehungsweise eine Kraft, die aufgrund der Zugspannkraft und der Anordnung der Vorrichtung in der Schlaufe oder Öse des biegeschlaffen Lastmittels auf diese wirkt. Im Rahmen der Erfindung wird nur von Zugspannkraft oder Vorspannkraft gesprochen.

Erfindungsgemäß ist die Vorrichtung als ein Strangpressprofil gefertigt, das in einzelne Abschnitte mit üblichen Verfahren zu trennen ist, wobei die Breite der jeweiligen Vorrichtung und damit des jeweiligen Federelements sich an der Breite des biegeschlaffen Lastmittels orientiert, in welches die jeweilige Vorrichtung eingesetzt werden soll. Die Vorrichtung kann darüber hinaus einfach in eine Öse oder Schlaufe seitlich eingeführt werden, nämlich eingesteckt werden. Die Arretierung erfolgt mittels der an deren Seiten der Bogenabschnitte befindlichen Elemente bzw. Wulst, die eine seitliche Führung bilden. Alternativ kommen andere Fertigungen in Betracht, so als zweiteiliges Bauteil, bei dem zwei Strangpressprofile miteinander verbunden werden.

Es kann vorgesehen sein, dass das Federelement mit den beiden Bogenabschnitten einen elliptischen Querschnitt in Längsausdehnung aufweist. Andere geeignete Formen, welche ebenfalls eine Funktion als Federelement gewähren, liegen ebenfalls im Rahmen der Erfindung. Es ist, wie erwähnt, in eine Schlaufe oder Öse des biegeschlaffen Lastmittels einsetzbar, wobei die Abmaße der Schlaufe oder Öse und die der Vorrichtung aneinander angepasst sind, sodass bei funktionsgemäßer Anordnung der Vorrichtung an dem biegeschlaffen Lastmittel in eine Schlaufe oder Öse des biegeschlaffen Lastmittels die Mantelflächen der Bogenabschnitte ganz oder zumindest teilweise an der Schlaufe oder der Öse des biegeschlaffen Lastmittels anliegen. Die Schlaufe oder die Öse des biegeschlaffen Lastmittels sind vorzugsweise, jedoch nicht erfindungsnotwendig aus zwei Lagen des biegenschlaffen Lastmittels gebildet, welche die Vorrichtung mit dem elliptischen Querschnitt funktionssicher aufnehmen können. Die Schlaufe bzw. Öse des biegeschlaffen Lastmittels passt sich bei der eingesetzten Vorrichtung dieser elliptischen Form an, sodass die zwei Lagen des biegeschlaffen Lastmittels zueinander einen spitzen Winkel bilden können.

Infolge dieser Ausgestaltung wird das Federelement der Vorrichtung im eingesetzten Zustand selbst nur mit einer geringen Zugspannkraft / Vorspannkraft beaufschlagt, als dies bei den bekannten Vorrichtungen der Fall ist. Die Vorrichtung kann daher auch filigraner als bekannte Belastungsanzeiger ausgestaltet sein, wodurch Material eingespart werden kann. Dies kann sogar derart erfolgen, dass die Vorrichtung mit sogar nur zwei Fingern eines Menschen verformbar ist.

In einer Ausgestaltung der Erfindung sind die mindestens beiden Indikatoranzeigen mittig an Innenflächen der Bogenabschnitte angeordnet, vorzugsweise, aber nicht erfindungsnotwendig in dem Bereich, in dem der Federinnenraum seine größte Ausdehnung aufweist. Die mindestens beiden Indikatoranzeigen können dabei Erhebungen der Innenflächen sein, so Wülste, Nippel oder Ähnliches. Die mindestens beiden Indikatoranzeigen können jedoch auch separate Bauteile sein.

Ferner kann vorgesehen sein, dass die mindestens beiden Indikatoranzeigen derart in den Federinnenraum hineinragen, sodass diese bei einer maximal auf das Federelement wirkenden Vorspannkraft aneinanderstoßen, so wenn sie sich beispielhaft direkt gegenüberliegend angeordnet sind.

Des Weiteren kann vorgesehen sein, dass die mindestens beiden Indikatoranzeigen derart in den Federinnenraum hineinragen, sodass diese bei einer übermäßig auf das Federelement wirkenden Vorspannkraft einander überschneiden, also einander passieren, so wenn sie beispielhaft versetzt zueinander angeordnet sind. Auch eine aufeinander abgestimmte verzahnte oder gestufte Gestaltung der Erhebungen liegt im Rahmen der Erfindung, sodass sich einzelne Stufen passieren oder aber nur einzelne Stufen aneinanderstoßen. Dies hat den Vorteil, dass in diesem Fall sogar Überbelastung erkennbar ist, wenn ein Überschneiden vorliegt. In einem solchen Fall kann bei funktionsgemäßem Einsatz der Vorrichtung in einem biegeschlaffen Lastmittel, welches gezurrt wird, die Zugspannkraft wieder vom Verwender verringert werden, sobald die Überlastung anhand der Vorrichtung erkannt wird.

In einer weiteren Ausgestaltung kann vorgesehen sein, dass sich an den Enden der konvexen Bogenabschnitte Flügelabschnitte anschließen. Die Bogenabschnitte laufen an ihren Enden in Flügelabschnitte aus. Sie dienen der Stabilisierung und verbesserten Anordnung der Vorrichtung. Die Flügelabschnitte können an ihren Enden mit Schlitzen versehene offene rohrähnliche Abschnitte aufweisen. Diese Abschnitte nehmen Erhebungen, so beispielhaft Stopfen, zur Fixierung, quer zum Längsverlauf des biegeschlaffen Lastmittels auf. Der jeweilige Schlitz der vorgenannten Abschnitte gewährleistet eine definierte Federwirkung zum Halten der Stopfen. Durch die rohrähnlichen Abschnitte wird ferner der Winkel zwischen zwei Lagen des biegeschlaffen Lastmittels und der Vorrichtung verringert, wodurch die Kraft, welche auf die Vorrichtung bei funktionsgemäßer Anordnung des biegenschlaffen Lastmittels an einer Last - so als Zurrgurt - wirkt, verkleinert.

Die Breite der Vorrichtung entspricht im Wesentlichen der Breite des biegeschlaffen Lastmittels, für welches die Vorrichtung bestimmt ist. Es kann so auch leicht in eine Schlaufe oder Öse desselben eingesetzt werden, wobei sich die Größe der Schlaufe oder Öse, wie bereits eingangs erläutert, nach den Abmaßen der Vorrichtung richtet, sodass bei funktionsgemäßer Anordnung der Vorrichtung an dem biegeschlaffen Lastmittel in eine Schlaufe oder Öse des biegeschlaffen Lastmittels die Mantelflächen der Bogenabschnitte ganz oder teilweise an der Schlaufe des biegeschlaffen Lastmittels anliegen.

So ist sichergestellt, dass bei funktionsgemäßer Anordnung der Vorrichtung an dem biegeschlaffen Lastmittel in eine Schlaufe oder Öse des biegeschlaffen Lastmittels bei Zugbeaufschlagung die Vorrichtung als Federelement gespannt wird, so wird auf die Bogenabschnitte eine Kraft ausgeübt, sodass sich die mindestens beiden Indikatoranzeigen aufeinander zubewegen, was eine Anzeige der Zugspannung, konkret der Vorspannkraft, gewährt. Das kann derart erfolgen, bis sie aneinanderstoßen oder sich passieren.

Es kann ebenfalls vorgesehen sein, dass die Vorrichtung an dem biegeschlaffen Lastmittel mittels stoffschlüssiger und/oder kraft- und/oder formschlüssiger Verbindung arretierbar ist. Insofern kommen alle bekannten Vorrichtungen und Verfahren in Betracht.

Des Weiteren kann die Vorrichtung an Randseiten der Bogenabschnitte eine Wulst oder dem Federinnenraum oder den Flügelabschnitten gegenüber abgewandt angeordnete Erhebungen aufweisen. Die Erhebungen können, wie bereits erläutert, auch separate Bauteile sein. Dies dient der besseren Arretierung in einer Öse oder Schlaufe des biegeschlaffen Lastmittels, damit diese nicht aus der Öse herausfällt.

In einer weitergehenden Ausgestaltung kann die Vorrichtung ferner als zweistückiges Federelement aus zwei Bogenabschnitten gebildet sein, wobei jeder Bogenabschnitt ein Bauteil ist und diese an ihren Endbereichen oder auf Flügelabschnitten aneinander liegen. Die Bogenabschnitte sind dabei derart miteinander verbunden, dass sich die Verbindung bei einer übermäßig auf das Federelement wirkenden Vorspannkraft F löst. Dies gewährt eine klare Anzeige der Überbeanspruchung des biegeschlaffen Lastmittels.

Eine Überbeanspruchung einer Zurrung kann des Weiteren dadurch angezeigt werden, dass die Vorrichtung folgende Ausgestaltung besitzt. Wenn sich die mindestens beiden Indikatoranzeigen passieren und sich überdecken, beispielhaft um mehr als 10 Prozent, oder wenn diese aneinanderstoßen, bricht das Federelement an mindestens einer Sollbruchstelle.

Der Vorteil der erfindungsgemäßen Lösung besteht darin, dass die Vorrichtung kostengünstig herstellbar ist. Es ist lediglich ein Bauteil notwendig, das zweiteilig ausgebildet ist. Eine Anzeige der Vorspannkraft ist leicht durch seitliche Betrachtung mittels des menschlichen Auges möglich. Sofern die mindestens beiden Indikatoranzeigen versetzt zueinander angeordnet sind, ist es sogar möglich, eine Überbelastung anzuzeigen, was bei den bisherigen Vorrichtungen nicht der Fall war.

Die Erfindung wird nachfolgend anhand zweier Ausführungsbeispiele unter Bezugnahme auf die Figuren weiter erläutert. Dabei ergeben sich weitere Vorteile, Merkmale und Ausgestaltungen der Erfindung.

Es zeigen:
Fig. 1 eine schematische Darstellung einer Vorrichtung als einstückiges Federelement mit sich gegenüberliegend angeordneten Indikatoranzeigen in Schrägperspektive,
Fig. 2 eine schematische Darstellung der Vorrichtung als einstückiges Federelement mit sich gegenüberliegend angeordneten Indikatoranzeigen in Seitenansicht,
Fig. 3 eine schematische Darstellung der Vorrichtung als zweistückiges Federelement mit sich gegenüberliegend angeordneten Indikatoranzeigen in Schrägperspektive,
Fig. 4 eine schematische Darstellung der Vorrichtung als zweistückiges Federelement mit sich gegenüberliegend angeordneten Indikatoranzeigen in Seitenansicht,
Fig. 5 eine schematische Darstellung eines Teils eines biegeschlaffen Lastmittels mit der Vorrichtung mit sich gegenüberliegend angeordneten Indikatoranzeigen in Schrägperspektive.

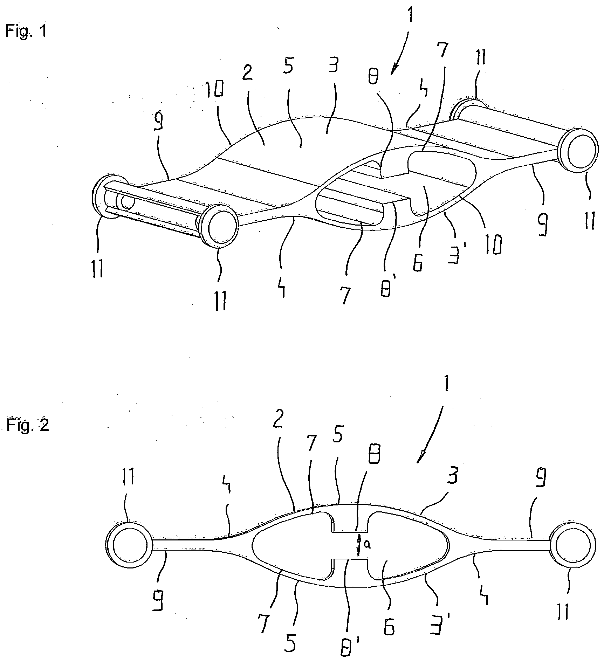

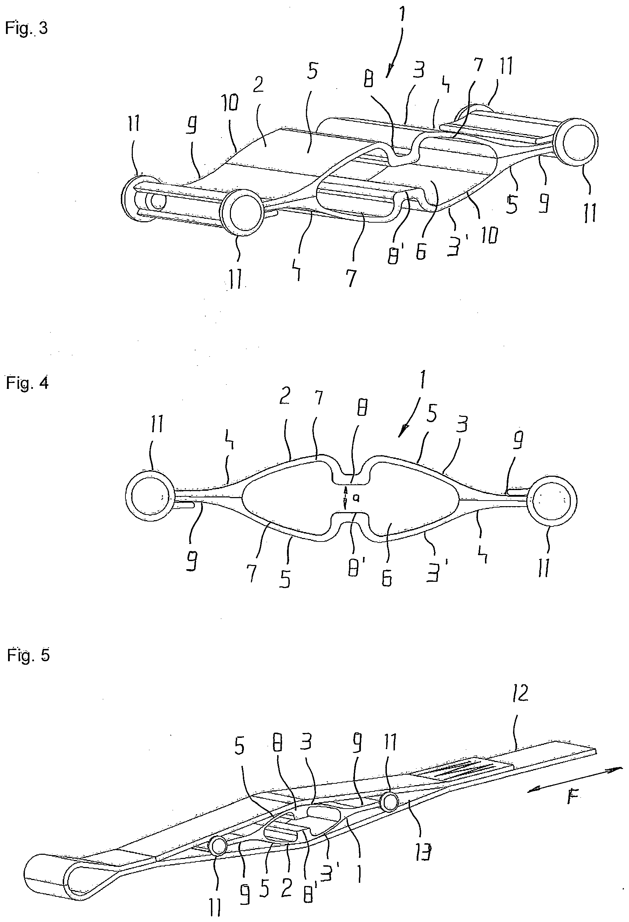

Der Aufbau der erfindungsgemäßen Vorrichtung 1 ist in den beiden Ausführungsbeispielen ähnlich. Sie unterscheiden sich im Wesentlichen darin, dass die Vorrichtung in den Fig. 1, 2 und 5 einstückig und in den Fig. 3 und 4 zweistückig ist.

Die Vorrichtung 1 dient jeweils zum Anzeigen einer Zugspannung an einem biegeschlaffen Lastmittel 12, wobei die Vorrichtung 1 in ihrer Längsausdehnung in Zugrichtung des biegenschlaffen Lastmittels 12 in eine vorzugsweise separat dafür vorgesehene Schlaufe 13 des angeordnet ist, wie aus Fig. 5 hervorgeht.

Die Vorrichtung 1 weist gemäß der Fig. 1, 2 und 5 ein einstückiges Federelement 2 und gemäß der Figuren 3 und 4 ein zweistückiges Federelement auf. Das jeweilige Federelement 2 besitzt zwei sich gegenüberliegende konvexe, elastisch verformbare Bogenabschnitte 3, 3', die an ihren Endbereichen 4 aneinander liegen. Äußere Flächen der Bogenabschnitte bilden eine Mantelfläche 5. An Endbereichen 4 der konvexen Bogenabschnitte 3, 3' schließen sich in beiden Ausführungsbeispielen Flügelabschnitte 9, 9' an. Durch die Bogenabschnitte 3, 3' wird ein Federinnenraum 6 gebildet. In der zweigeteilten Ausgestaltung der Vorrichtung 1 gemäß Fig. 3 und 4 sind die beiden Bogenabschnitte 3, 3' im Bereich der Flügelabschnitte 9, 9' miteinander funktionssicher verbunden.

In dem Federinnenraum 6 an Innenflächen 7 der beiden Bogenabschnitte 3, 3' ist im Ausführungsbeispiel jeweils eine Indikatoranzeige 8, 8' angeordnet, die in den Federinnenraum 6 hineinragt. Die in den beiden Ausführungsbeispielen jeweils zwei Indikatoranzeigen 8, 8' sind zueinander gegenüberliegend im Federinnenraum 6 angeordnet. In einer Nullstellung der Vorrichtung 1 ohne eine auf die Bogenabschnitte 3, 3', welche das Federelement 2 bilden, wirkende Kraft, so Zugspannkraft bei Anordnung in dem funktionsgemäß verwendeten biegeschlaffen Lastmittel 12, besitzen die Indikatoranzeigen 8, 8' einen definierten Abstand a zueinander. Bei einer auf die Bogenabschnitte 3, 3' wirkenden Kraft verringert sich der definierte Abstand a erfindungsgemäß und kann so eine Veränderung der auf die Vorrichtung 1 wirkenden Kraft anzeigen. Bei Anordnung in dem funktionsgemäß verwendeten biegeschlaffen Lastmittel 12 kann so eine sich verändernde Zugspannkraft und damit auch die sich beim Verzurren aufbauende Vorspannkraft F des biegeschlaffen Lastmittels 12 angezeigt werden.

In den beiden Ausführungsbeispielen weist das Federelement 2 mit den beiden Bogenabschnitten 3, 3' einen elliptischen Querschnitt in Längsausdehnung auf. Es ist, wie erwähnt, in eine Schlaufe 13 des biegeschlaffen Lastmittels 12 einsetzbar, was in Fig. 5 dargestellt ist. Die Abmaße der Schlaufe 13 und die der Vorrichtung 1 sind aneinander angepasst, sodass bei funktionsgemäßer Anordnung der Vorrichtung 1 an dem biegeschlaffen Lastmittel 12 in der Schlaufe 13 die Mantelflächen 5 der Bogenabschnitte 3, 3' zumindest teilweise an der Schlaufe 13 des biegeschlaffen Lastmittels 12 anliegen. Die Schlaufe 13 ist im Ausführungsbeispiel gemäß Fig. 5 aus zwei Lagen des biegenschlaffen Lastmittels gebildet, welche die Vorrichtung mit dem elliptischen Querschnitt funktionssicher aufnimmt. Die Schlaufe 13 passt sich bei der eingesetzten Vorrichtung 1 dieser elliptischen Form an, sodass die zwei Lagen des biegeschlaffen Lastmittels 12 zueinander einen spitzen Winkel bilden können.

Ist die Vorrichtung 1 von einer Schlaufe 13 des biegeschlaffen Lastmittels 12, im Ausführungsbeispiel ein Zurrgurt, aufgenommen, erfolgt die Arretierung durch Erhebungen 11, welche an Randseiten 10 der Vorrichtung angeordnet sind, im Ausführungsbeispiel weisen die Flügelabschnitte 9, 9' Erhebungen 11 auf.

Im Ausführungsbeispiel sind die jeweils beiden Indikatoranzeigen 8, 8' mittig an Innenflächen 7 der Bogenabschnitte 3, 3' angeordnet und zwar in dem Bereich, in dem der Federinnenraum 6 seine größte Ausdehnung aufweist. Die jeweils beiden Indikatoranzeigen 8, 8' sind dabei im Ausführungsbeispiel gemäß der Fig. 1,2 und 5 Erhebungen der Innenflächen, nämlich Nippel. Im Ausführungsbeispiel gemäß der Fig. 3 und 4 sind die beiden Indikatoranzeigen als sickenartige Vertiefungen der Bogenabschnitte 3, 3' ausgebildet.

Die jeweils beiden Indikatoranzeigen 8, 8' ragen bei beiden Ausführungsbeispielen derart in den Federinnenraum 6 hinein, sodass diese bei einer maximal auf das Federelement 2 wirkenden Vorspannkraft F aneinanderstoßen. Dies indiziert sodann eine übermäßige Zugbeanspruchung des biegeschlaffen Lastmittels 12, so wenn es mit weiteren Bestandteilen, wie Ratsche, Haken oder sonstige Haltemittel an einer zu zurrenden beziehungsweise gezurrten Last verwendet wird. So kommt beispielhaft als Einsatzbeispiel der Vorrichtung 1 eine Zurrvorrichtung für ein Ladegut, so beispielhaft ein Rades eines Fahrzeugs mit einem dafür vorgesehen biegeschlaffen Lastmittel 12, beispielhaft in Form eine Spanngurts, mit einer Zurreinrichtung, so beispielhaft einer Ratsche, und Halteelementen, wie beispielhaft Haken, zu einer dem Fachmann bekannten Arretierung des Ladeguts, so beispielhaft des Rades eines Fahrzeugs auf einem Untergrund aus einem flächenhaften Gebilde mit Durchbrüchen, in Betracht. Der Spanngurt kann dabei eine separat dafür vorgesehene Schlaufe zur Aufnahme der Vorrichtung 1 aufweisen oder die Vorrichtung 1 kann auch in eine sonstige geeignete Schlaufe eingelegt sein. Die Vorrichtung 1 ist in beiden Ausführungsbeispielen einfach zu fertigen. Sie kann leicht in die Schlaufe 13 des biegeschlaffen Lastmittels 12, so des Spanngurts, eingesetzt und bei einem Defekt oder einem Bruch bei Überbeanspruchung getauscht werden. Auch ist die Vorrichtung 1 als Anzeige der Zugspannung des Lastmittels 12 leicht ablesbar, was gerade bei der Verzurrung von Fahrzeugen vorteilhaft ist.

### Bezugszeichenliste:

- 1.: Vorrichtung
- 2.: Federelement
- 3.: Bogenabschnitte
- 4.: Endbereiche
- 5.: Mantelfläche
- 6.: Federinnenraum
- 7.: Innenflächen
- 8.: Indikatoranzeige
- 9.: Flügelabschnitte
- 10.: Randseiten
- 11.: Erhebungen
- 12.: biegeschlaffes Lastmittel
- 13.: Schlaufe
- a: definierter Abstand
- F: Vorspannkraft

## Patentansprüche

1. Vorrichtung (1) zum Anzeigen einer Zugspannung an einem biegeschlaffen Lastmittel (12), die Vorrichtung (1) in ihrer Längsausdehnung in Zugrichtung des biegenschlaffen Lastmittels (12) anordenbar ist, wobei die Vorrichtung (1) ein Federelement (2) mit zwei sich gegenüberliegenden konvexen, elastisch verformbaren Bogenabschnitten (3), (3') aufweist, die an ihren Endbereichen (4) aneinander liegen und durch die Bogenabschnitte (3), (3') ein Federinnenraum (6) gebildet wird, in dem Federinnenraum (6) an Innenflächen (7) der beiden Bogenabschnitte (3), (3') jeweils mindestens eine Indikatoranzeige (8) angeordnet ist und sich die mindestens zwei Indikatoranzeigen (8), (8') entweder gegenüberliegend oder versetzt zueinander angeordnet sind und in einer Nullstellung ohne eine auf die Bogenabschnitte (3), (3'), also das Federelement (2), wirkende Kraft einen definierten Abstand a zueinander besitzen und bei einer auf die Bogenabschnitte (3), (3'), also das Federelement (2), wirkenden Kraft sich der definierte Abstand a verringert, **dadurch gekennzeichnet, dass** die Vorrichtung (1) und damit das jeweilige Federelement (2) zweistückig ist, wobei zwei Strangpressprofilabschnitte miteinander verbunden sind.

2. Vorrichtung (1) nach Anspruch 1, wobei die mindestens zwei Indikatoranzeigen (8), (8') in den Federinnenraum (6) hineinragen.

3. Vorrichtung (1) nach Anspruch 2, wobei die mindestens zwei Indikatoranzeigen (8), (8') derart in den Federinnenraum (6) hineinragen, sodass diese bei einer maximal auf das Federelement (2) wirkenden Vorspannkraft F aneinanderstoßen.

4. Vorrichtung (1) nach Anspruch 2, wobei die mindestens zwei Indikatoranzeigen (8), (8') derart in den Federinnenraum (6) hineinragen, sodass diese bei einer übermäßig auf das Federelement (2) wirkenden Vorspannkraft F einander überschneiden.

5. Vorrichtung (1) nach einem der vorherigen Ansprüche, wobei sich an den Enden der Bogenabschnitte (3), (3') Flügelabschnitte (9) anschließen.

6. Vorrichtung (1) nach Anspruch 5, wobei die Flügelabschnitte (9) an ihren Enden mit Schlitzen versehene offene rohrähnliche Abschnitte aufweisen.

7. Vorrichtung (1) nach einem der vorherigen Ansprüche, wobei die Breite der Vorrichtung (1) und damit des jeweiligen Federelements (2) und so der Abschnitte sich an der Breite des biegeschlaffen Lastmittels (12) orientiert.

8. Vorrichtung (1) nach einem der vorherigen Ansprüche, wobei die Vorrichtung (1) in eine Schlaufe (13) oder Öse des biegeschlaffen Lastmittels (12) anordenbar ist.

9. Vorrichtung (1) nach einem der vorherigen Ansprüche 5 bis 8, wobei die Vorrichtung (1) an Randseiten (10) der Bogenabschnitte (3) eine Wulst oder dem Federinnenraum (6) oder den Flügelabschnitten (9) gegenüber abgewandt angeordnete Erhebungen (11) aufweist.

10. Vorrichtung (1) nach einem der vorherigen Ansprüche, wobei die Vorrichtung (1) an dem biegeschlaffen Lastmittel (12) mittels stoffschlüssiger und/oder kraft- und/oder formschlüssiger Verbindung arretierbar ist.

11. Vorrichtung (1) nach einem der vorherigen Ansprüche, wobei bei funktionsgemäßer Anordnung der Vorrichtung (1) an dem biegeschlaffen Lastmittel (12) in eine Schlaufe (13) oder Öse des biegeschlaffen Lastmittels (12) Mantelflächen (5) der Bogenabschnitte (3), (3') ganz oder teilweise an der Schlaufe (13) oder der Öse des biegeschlaffen Lastmittels (12) anliegen.

12. Vorrichtung (1) nach einem der vorherigen Ansprüche, wobei bei funktionsgemäßer Anordnung der Vorrichtung (1) an dem biegeschlaffen Lastmittel in eine Schlaufe (13) oder Öse des biegeschlaffen Lastmittels (12) bei Zugbeaufschlagung die Vorrichtung (1) als Federelement (2) gespannt wird und sich die mindestens zwei Indikatoranzeigen (8), (8') aufeinander zubewegen.

13. Vorrichtung (1) nach einem der vorherigen Ansprüche, wobei die Vorrichtung (1) als zweistückiges Federelement (2) aus zwei Bogenabschnitten (3), (3') gebildet wird, die an ihren Endbereichen (4) aneinander liegen und die Bogenabschnitte (3), (3') derart miteinander verbunden sind, dass sich die Verbindung bei einer übermäßig auf das Federelement (2) wirkenden Vorspannkraft F löst.

14. Vorrichtung (1) nach einem der vorherigen Ansprüche, wobei das Federelement (2) an mindestens einer Sollbruchstelle bricht, wenn sich die mindestens zwei Indikatoranzeigen (8), (8') passieren und sich überdecken oder wenn diese aneinanderstoßen.

15. Zurrvorrichtung mit einem biegeschlaffen Lastmittel (12) mit einer Zurreinrichtung und Halteelementen zur Arretierung eines Ladeguts enthaltend eine Vorrichtung (1), welche gemäß einer der Ansprüche 1 bis 14 ausgestaltet ist.

16. Biegeschlaffes Lastmittel (12) enthaltend eine Vorrichtung (1), welche gemäß einer der Ansprüche 1 bis 14 ausgestaltet ist.

## Claims

1. A device (1) for indicating tensile stress on a flexible load-bearing means (12), the device (1) being arrangeable in its lengthwise extent in the tensile direction of the flexible load-bearing means (12), the device (1) having a spring element (2) with two mutually opposing, convex, resiliently deformable arcuate portions (3), (3') that lie against one another at their end regions (4), an inner spring compartment (6) being formed by the arcuate portions (3), (3'), at least one indicator (8) being arranged in the inner spring compartment (6) on inner faces (7) of the two arcuate portions (3), (3'), and the at least two indicators (8), (8') being arranged either opposite one another or offset relative to one another and having a defined distance a from one another in an initial position where no force is acting on the arcuate portions (3), (3'), i.e., the spring element (2), the defined distance a decreasing in the event of a force acting on the arcuate portions (3), (3'), i.e., the spring element (2), **characterized in that** the device (1) and thus the respective spring element (2) is of two-piece construction, two extruded profile portions being connected together.

2. The device (1) according to Claim 1, wherein the at least two indicators (8), (8') project into the inner spring compartment (6).

3. The device (1) according to Claim 2, wherein the at least two indicators (8), (8') project in such a way into the inner spring compartment (6) that they abut one another when a maximum pretensioning force F is acting on the spring element 2.

4. The device (1) according to Claim 2, wherein the at least two indicators (8), (8') project in such a way into the inner spring compartment (6) that they overlap when an excessive pretensioning force F is acting on the spring element 2.

5. The device (1) according to any one of the preceding claims, wherein wing portions (9) adjoin the ends of the arcuate portions (3), (3').

6. The device (1) according to Claim 5, wherein the wing portions (9) have open, slotted, tube-like portions at their ends.

7. The device (1) according to any one of the preceding claims, wherein the width of the device (1) and thus of the respective spring element (2) and consequently of the portions is geared to the width of the flexible load-bearing means (12).

8. The device (1) according to any one of the preceding claims, wherein the device (1) is arrangeable in a loop (13) or eyelet of the flexible load-bearing means (12).

9. The device (1) according to any one of preceding Claims 5 to 8, wherein, at edge faces (10) of the arcuate portions (3), the device (1) has a bead or raised portions (11) arranged facing away from the inner spring compartment (6) of the wing portions (9).

10. The device (1) according to any one of the preceding claims, wherein the device (1) can be locked in position on the load-bearing means (12) by means of an integrally bonded and/or force- and/or form-locked connection.

11. The device (1) according to any one of the preceding claims, wherein, when the device (1) is arranged functionally on the flexible load-bearing means (12) in a loop (13) or eyelet of the flexible loading-bearing means (12), bounding faces (5) of the arcuate portions (3), (3') rest wholly or in part against the loop (13) or the eyelet of the flexible load-bearing means (12).

12. The device (1) according to any one of the preceding claims, wherein, when the device (1) is arranged functionally on the flexible load-bearing means in a loop (13) or eyelet of the flexible loading-bearing means (12), in the event of tensile stress being applied the device (1), it being a spring element (2), is tensioned and the at least two indicators (8), (8') move toward one another.

13. The device (1) according to any one of the preceding claims, wherein the device (1) takes the form of a two-piece spring element (2) consisting of two arcuate portions (3), (3') that lie against one another at their end regions (4), the arcuate portions (3), (3') being connected together in such a way that the connection becomes detached in the event of an excessive pretensioning force F acting on the spring element (2).

14. The device (1) according to any one of the preceding claims, wherein the spring element (2) breaks at at least one predetermined breaking point if the at least two indicators (8), (8') pass one another and overlap or if they abut one another.

15. A lashing device having a flexible load-bearing means (12) with a lashing mechanism and retaining elements for securing a cargo, including a device (1) configured according to any one of Claims 1 to 14.

16. A flexible load-bearing means (12) including a device (1) configured according to any one of Claims 1 to 14.

## Revendications

1. Dispositif (1) destiné à indiquer une tension de traction au niveau d'un moyen de charge mou en flexion (12), le dispositif (1) pouvant être disposé, selon son étendue longitudinale, dans la direction de traction du moyen de charge mou en flexion (12), le dispositif (1) présentant un élément à ressort (2) pourvu de deux sections arquées (3), (3') convexes, élastiquement déformables, opposées l'une à l'autre, qui reposent l'une contre l'autre au niveau de leurs régions d'extrémité (4), et un espace intérieur de ressort (6) étant formé par les sections arquées (3), (3'), au moins un indicateur visuel (8) étant disposé, dans l'espace intérieur de ressort (6), sur chacune des surfaces intérieures (7) des deux sections arquées (3), (3'), et les au moins deux indicateurs visuels (8), (8') étant disposés soit en regard l'un de l'autre, soit de manière décalée l'un par rapport à l'autre, et présentant l'un par rapport à l'autre, dans une position neutre sans force agissant sur les sections arquées (3), (3'), et donc sur l'élément à ressort (2), une distance définie a, et la distance définie a diminuant lorsqu'une force agit sur les sections arquées (3), (3'), et donc sur l'élément à ressort (2), **caractérisé en ce que** le dispositif (1), et donc l'élément à ressort (2) respectif, est à deux pièces, deux sections de profilé extrudé étant reliées l'une à l'autre.

2. Dispositif (1) selon la revendication 1, dans lequel les au moins deux indicateurs visuels (8), (8') font saillie dans l'espace intérieur de ressort (6).

3. Dispositif (1) selon la revendication 2, dans lequel les au moins deux indicateurs visuels (8), (8') font saillie dans l'espace intérieur de ressort (6) de telle sorte qu'ils viennent en butée l'un contre l'autre lorsqu'une force de précontrainte maximale F agit sur l'élément à ressort (2).

4. Dispositif (1) selon la revendication 2, dans lequel les au moins deux indicateurs visuels (8), (8') font saillie dans l'espace intérieur de ressort (6) de telle sorte qu'ils se chevauchent lorsqu'une force de précontrainte excessive F agit sur l'élément à ressort (2).

5. Dispositif (1) selon l'une des revendications précédentes, dans lequel des sections d'aile (9) se raccordent aux extrémités des sections arquées (3), (3').

6. Dispositif (1) selon la revendication 5, dans lequel les sections d'aile (9) présentent, à leurs extrémités, des sections ouvertes similaires à des tubes, pourvues de fentes.

7. Dispositif (1) selon l'une des revendications précédentes, dans lequel la largeur du dispositif (1), et donc de l'élément à ressort (2) respectif et ainsi des sections, est adaptée à la largeur du moyen de charge mou en flexion (12).

8. Dispositif (1) selon l'une des revendications précédentes, dans lequel le dispositif (1) peut être disposé dans une boucle (13) ou un œillet du moyen de charge mou en flexion (12).

9. Dispositif (1) selon l'une des revendications 5 à 8 précédentes, dans lequel le dispositif (1) présente, sur des côtés de bord (10) des sections arquées (3), un bourrelet ou des saillies (11) disposées à l'opposé de l'espace intérieur de ressort (6) ou des sections d'aile (9).

10. Dispositif (1) selon l'une des revendications précédentes, dans lequel le dispositif (1) peut être immobilisé sur le moyen de charge mou en flexion (12) au moyen d'une liaison par matière et/ou par adhérence et/ou par complémentarité de forme.

11. Dispositif (1) selon l'une des revendications précédentes, dans lequel, lorsque le dispositif (1) est disposé conformément à sa fonction sur le moyen de charge mou en flexion (12), dans une boucle (13) ou un œillet du moyen de charge mou en flexion (12), des surfaces d'enveloppe (5) des sections arquées (3), (3') reposent entièrement ou partiellement contre la boucle (13) ou l'œillet du moyen de charge mou en flexion (12).

12. Dispositif (1) selon l'une des revendications précédentes, dans lequel, lorsque le dispositif (1) est disposé conformément à sa fonction sur le moyen de charge mou en flexion, dans une boucle (13) ou un œillet du moyen de charge mou en flexion (12), le dispositif (1) est mis en tension en tant qu'élément à ressort (2) lors d'une sollicitation en traction, et les au moins deux indicateurs visuels (8), (8') se déplacent l'un vers l'autre.

13. Dispositif (1) selon l'une des revendications précédentes, dans lequel le dispositif (1) est formé, en tant qu'élément à ressort (2) à deux pièces, de deux sections arquées (3), (3') qui reposent l'une contre l'autre au niveau de leurs régions d'extrémité (4), et les sections arquées (3), (3') sont reliées l'une à l'autre de telle sorte que la liaison se défait lorsqu'une force de précontrainte excessive F agit sur l'élément à ressort (2).

14. Dispositif (1) selon l'une des revendications précédentes, dans lequel l'élément à ressort (2) se rompt au niveau d'au moins un point de rupture prédéterminé lorsque les au moins deux indicateurs visuels (8), (8') passent l'un devant l'autre et se recouvrent ou lorsqu'ils viennent en butée l'un contre l'autre.

15. Dispositif d'arrimage comportant un moyen de charge mou en flexion (12) pourvu d'un appareil d'arrimage et d'éléments de maintien destinés à immobiliser une charge, contenant un dispositif (1) qui est conçu selon l'une des revendications 1 à 14.

16. Moyen de charge mou en flexion (12) contenant un dispositif (1) qui est conçu selon l'une des revendications 1 à 14.
